# EUROPÄISCHE PATENTSCHRIFT

(11) **EP 1 708 354 B1**
(45) Veröffentlichungstag und Bekanntmachung des Hinweises auf die Patenterteilung: **14.10.2009**
(21) Anmeldenummer: 05007029.1
(22) Anmeldetag: 31.03.2005
(51) Int. Cl.: H02P 1/42, F04D 15/00

(54) **Tauchmotor**
Submersible motor
Moteur submersible

(43) Veröffentlichungstag der Anmeldung: 04.10.2006
(73) Patentinhaber: Grundfos Management A/S, 8850 Bjerringbro (DK)
(72) Erfinder: Børsting, Hakon, 9530 Stovring (DK); Henriksen, Bjarne, 8722 Hedensted (DK); Rasmussen, Claus B., 8860 Ulstrup (DK)
(74) Vertreter: Hemmer, Arnd

(56) Entgegenhaltungen:
- EP-A- 1 315 279
- US-A- 4 409 532
- US-A- 5 483 139
- PATENT ABSTRACTS OF JAPAN Bd. 1996, Nr. 05, 31. Mai 1996 (1996-05-31) & JP 08 028488 A (TSURUMI MFG CO LTD; others: 01), 30. Januar 1996 (1996-01-30)
- PATENT ABSTRACTS OF JAPAN Bd. 008, Nr. 115 (E-247), 29. Mai 1984 (1984-05-29) & JP 59 028889 A (AICHI EMASON DENKI KK), 15. Februar 1984 (1984-02-15)
- PATENT ABSTRACTS OF JAPAN Bd. 1996, Nr. 05, 31. Mai 1996 (1996-05-31) & JP 08 028490 A (TSURUMI MFG CO LTD; others: 01), 30. Januar 1996 (1996-01-30)

## Beschreibung

Die Erfindung betrifft einen Tauchmotor für eine Tauchpumpe.

Tauchmotoren werden bei Tauchpumpen eingesetzt, welche mit dem Motor in einen Pumpensumpf eingetaucht sind, um aus diesem ein Fluid, vorzugsweise Wasser zu fördern. Diese Tauchmotoren werden üblicherweise mit Wechselspannung aus dem öffentlichen Stromnetz betrieben. Dazu sind die Touchmotoren als Asynchronmotoren ausgebildet. Zum Start bzw. Anlaufen eines solchen Asynchronmotors sind spezielle Maßnahmen erforderlich. So wird bei einphasigen Asynchronmotoren zumindest eine Hilfswicklung vorgesehen, welche zum Starten bzw. Anlaufenlassen des Motors Verwendung findet. Die Bestromung einer solchen Hilfswicklung beim Anlaufen erfolgt über einen Kondensator (Kondensatormotor mit Anlaufkondensator) oder über einen Widerstand (Motor mit widerstandshilfsphase). Diese bekannten Startverfahren für einen Asynchronmotor haben bei Verwendung als Tauchmotor an einer Tauchpumpe gewisse Nachteile.

So weisen Motoren, welche über eine Hilfswicklung mit Widerstand gestartet werden, ein geringes Startmoment auf, was bei Touchmotoren in Tauchpumpen von Nachteil ist. Motoren mit Anlaufkondensator haben bei Verwendung als Tauchmotor den Nachteil, dass Elektrolytkondensatoren bei bestimmten Anwendungen nicht im Pumpensumpf angeordnet werden dürfen, so dass die Startelektronik mit dem Elektrolytkondensator außerhalb des Pumpensumpfes angeordnet werden muss, wodurch der Verkabelungsaufwand zum Anschließen des Tauchmotors erhöht wird, insbesondere zumindest eine weitere elektrische Leitung zusätzlich zu den Versorgungsleitungen in den Pumpensumpf geführt werden muss.

JP 08 028 488 offenbart eine Tauchpumpe mit einem als Widerstandsstarter ausgebildeten Hilfsphasen-Motor. Hier ist ein elektronischer Schalter vorgesehen, um die Hilfsphase abzuschalten, wenn der Motor eine vorbestimmte Drehzahl erreicht hat. Eine entsprechende Tauchpumpe mit einem derart zu startenden Elektromotor ist auch aus JP 08 028 490 bekannt.

Es ist Aufgabe der Erfindung, einen verbesserten Tauchmotor für eine Tauchpumpe zu schaffen, welcher ein hohes Startmoment bietet und auf die Anordnung eines Elektrolytkondensators für den Startvorgang des Motors verzichten kann. Diese Aufgabe wird durch einen Tauchmotor für eine Tauchpumpe mit den im Anspruch 1 angegebenen Merkmalen gelöst. Bevorzugte Ausführungsformen ergeben sich aus den Unteransprüchen.

Der erfindungsgemäße Tauchmotor für eine Tauchpumpe ist als einphasiger Asynchronmotor ausgebildet und weist eine Hauptwicklung sowie eine Hilfswicklung zum Starten bzw. Anlaufen des Motors auf. Nach dem Anlaufen kann die Hilfswicklung abgeschaltet werden oder aber auch im regulären Betrieb des Motors weiter bestromt werden, beispielsweise nach Art eines Kondensatormotors mit Betriebskondensator. Ferner weist der erfindungsgemäße Tauchmotor eine Starteinrichtung auf, welche zur Steuerung des Startvorganges des Tauchmotors dient. Die Starteinrichtung wird von einer elektronischen Anordnung gebildet, welche zumindest einen elektronischen Schalter im Stromkreis der Hilfswicklung aufweist. Über diesen elektronischen Schalter steuert die Starteinrichtung während der Startphase die Bestromung der Hilfswicklung. Der elektronische Schalter kann von der Starteinrichtung so betätigt werden, dass die Hilfswicklung immer genau zu den richtigen Zeitpunkten in Abhängigkeit der Winkelposition des Rotors des Tauchmotors und der Phase der Versorgungsspannung eingeschaltet wird. So kann sichergestellt werden, dass die Hilfswicklung immer im richtigen Moment mit der richtigen Phase bestromt wird, um einen Drehmomentimpuls auf den Rotor auszuüben, d. h. die Bestromung wird auf die Winkelposition des elektromagnetischen Feldes des Rotors abgestimmt, so dass der Rotor beschleunigt werden kann. Zur Betätigung des elektronischen Schalters kann die Starteinrichtung als eigene elektronische Steuereinrichtung bzw. Regeleinrichtung ausgebildet sein oder aber in eine übergeordnete Steuer- bzw. Regeleinrichtung zum Betrieb des Tauchmotors integriert sein.

Die gezielt steuerbare Bestromung der Hilfswicklung über den elektronischen Schalter ermöglicht ein sehr hohes Startmoment des Motors bei vergleichsweise geringem Startstrom. Darüber hinaus ist kein Kondensator für den Startvorgang des Motors erforderlich, so dass die gesamte Starteinrichtung direkt an dem Tauchmotor, d. h. mit im Pumpensumpf angeordnet werden kann. Auf diese Weise wird die erforderliche Verkabelung zu einer außerhalb des Pumpensumpfes angeordneten Starteinrichtung überflüssig.

Vorzugsweise weist die Starteinrichtung zur Steuerung der Bestromung der Hauptwicklung zusätzlich einen elektronischen Schalter im Stromkreis der Hauptwicklung auf. Dies ermöglicht beim Startvorgang nicht nur die Hilfswicklung gezielt zu bestromen, Vielmehr kann auch die Hauptwicklung gezielt in Abhängigkeit der Phase der Vorsorgungsspannung, welche eine Wechselspannung ist, und der Rotorposition bzw. der Winkelposition des Rotormagnetfeldes bestromt werden, um ein auf den Rotor wirkendes Drehmoment zu erzeugen und den Motor zu starten. Dadurch kann der Startvorgang weiter verbessert werden.

Vorzugsweise ist der elektronische Schalter, wie er in dem Stromkreis der Hilfswicklung und/oder dem Stromkreis der Hauptwicklung eingesetzt wird, ein Triac.

Die Startvorrichtung ist vorzugsweise derart ausgebildet, dass sie zum Starten des Tauchmotors zumindest einen charakteristischen Wert der induzierten Gegenspannung in der Hauptwicklung und/oder in der Hilfswicklung erfasst und die Bestromung der Haupt- und/oder Hilfswicklung in Abhängigkeit dieses Wertes steuert. Die induzierte Gegenspannung ist abhängig von der Winkelposition des Rotors bzw. des Rotormagnetfeldes, so dass aus den charakteristischen Werten der induzierten Gegenspannung auf die Rotorposition geschlossen werden kann und die Bestromung der Haupt- und/oder der Hilfswicklung zum Beschleunigen des Rotors in Abhängigkeit eines solchen charakteristischen Wertes gesteuert werden kann, um sicherzustellen, dass die Bestromung immer so erfolgt, dass ein in der gewünschten Drehrichtung des Motors wirkendes Drehmoment auf den Rotor wirkt.

Weiter bevorzugt ist die Starteinrichtung so ausgebildet, dass sie zum Starten des Tauchmotors zumindest einen charakteristischen Wert einer Versorgungsspannung des Tauchmotors erfasst und die Bestromung der Haupt- und/oder der Hilfswicklung in Abhängigkeit dieses Wertes steuert. Insbesondere erfasst die Starteinrichtung den Phasenverlauf der Versorgungsspannung, so dass die Bestromung der Haupt- und der Hilfswicklung zum richtigen Zeitpunkt bei der richtigen Phase bzw. dem richtigen Phasenwinkel erfolgen kann, um ein in der gewünschten Richtung auf den Rotor wirkendes Drehmoment zu erzeugen, um diesen zu beschleunigen.

Gemäß einer bevorzugten Ausführungsform der Erfindung ist die Starteinrichtung derart ausgebildet, dass sie zum Starten des Tauchmotors die Bestromung der Hilfs- oder Hauptwicklung, vorzugsweise der Hauptwicklung nach einem erfassten Nulldurchgang der Versorgungsspannung, vorzugsweise für ein bestimmtes Zeitintervall einschaltet. Bevorzugt wird zuerst die Hauptwicklung bestromt, alternativ ist es jedoch auch möglich, zuerst die Hilfswicklung zu bestromen. Durch dieses Vorgehen wird beim Stillstand des Tauchmotors eine erste Magnetisierung des Rotors stattfinden, um ihn dann durch weitere Bestromung der Haupt- und /oder Hilfswicklung in Rotation versetzen zu können. Diese Bestromung erfolgt direkt nach einem Nulldurchgang der Versorgungsspannung, so dass sichergestellt ist, dass die Bestromung in einer bestimmten Phase der Versorgungsspannung erfolgt. Die Bestromung kann für ein bestimmtes Zeitintervall erfolgen und nach Ablauf dieses Zeitintervalls wieder abgeschaltet werden. Alternativ ist es möglich, die Bestromung der Hauptwicklung dauerhaft einzuschalten und den weiteren Startvorgang nur über die Bestromung der Hilfswicklung zu steuern.

Weiter bevorzugt ist die Starteinrichtung derart ausgebildet, dass sie zum Starten des Tauchmotors in einer dem ersten Einschalten der Bestromung der Hilfs- oder der Hauptwicklung nachfolgenden zweiten Halbperiode der Versorgungsspannung die Bestromung der Haupt- oder der Hilfswicklung, vorzugsweise der Hilfswicklung für ein bestimmtes Zeitintervall einschaltet. Je nachdem, welche der Wicklungen zuerst bestromt wurde, wird in der genannten zweiten Halbperiode die jeweils andere Wicklung bestromt. D. h. wenn gemäß der bevorzugten Ausführungsform zur Magnetisierung des Rotors zuerst die Hauptwicklung bestromt wird, wird in der zweiten Halbperiode die Hilfswicklung bestromt. Falls gemäß der alternativen Ausführungsform zuerst die Hilfswicklung bestromt wird, wird in der zweiten Halbperiode die Hauptwicklung bestromt. Dabei muss die zweite Halbperiode nicht direkt auf die erste Halbperiode, in welcher die erste Bestromung der Hauptwicklung erfolgt, folgen, vielmehr kann diese zweite Halbperiode auch einige Perioden später liegen. Allerdings sollte die Bestromung der Hilfswicklung derart zeitnah zu der ersten Bestromung der Hauptwicklung erfolgen, dass die Magnetisierung des Rotors durch die Bestromung der Hauptwicklung noch nicht abgeklungen ist. Auf diese Weise wird durch die Bestromung der Hilfswicklung und aufgrund der zuvor erfolgten Magnetisierung des Rotors durch Bestromung der Hauptwicklung ein Drehmoment auf den Rotor erzeugt. Dadurch, dass die Bestromung der Hilfswicklung ebenfalls in Abhängigkeit der Periode bzw. der Phase der Versorgungsspannung erfolgt, wird erreicht, dass zum richtigen Zeitpunkt ein richtig gerichtetes Magnetfeld auf den Rotor wirkt, um diesen in einer gewünschten Richtung zu beschleunigen. Die Bestromung der Hilfswicklung erfolgt nur für ein bestimmtes Zeitintervall und wird danach wieder abgeschaltet, so dass nur ein Drehmomentpuls auf den Rotor wirkt.

Vorzugsweise ist die Starteinrichtung derart ausgebildet, dass sie zum Starten des Tauchmotors in einer dem Einschalten der Bestromung der Hauptwicklung und der Hilfswicklung nachfolgenden dritten Halbperiode der Versorgungsspannung eine Winkelposition des Rotorfeldes im Verhältnis zu der Versorgungsspannung bzw. deren Phasenveriauf durch Analyse der induzierten Gegenspannung in der Hauptwicklung ermittelt und bei Erfassung einer vorbestimmten Winkelposition relativ zu der Versorgungsspannung die Bestromung der Hauptspule in einer nachfolgenden vierten Halbperiode der Versorgungsspannung für ein bestimmtes Zeitintervall einschaltet. Die dritte Halbperiode, in der diese Analyse erfolgt, muss wiederum nicht direkt auf die erste Halbperiode, in welcher die erste Bestromung der Hauptspule erfolgt und/oder die zweite Halbperiode, in welcher die Bestromung der Hilfswicklung erfolgt, folgen, vielmehr kann sie auch einige Halbperioden später erfolgen, wobei der zeitliche Abstand vorzugsweise so gewählt sein sollte, dass die Wirkung des vorangehenden Drehmomentpulses auf den Rotor noch nicht abgeklungen ist, d. h. der Rotor sich noch nicht wieder zu stark verlangsamt, um eine weitere Beschleunigung des Rotors zu erreichen. Für die genannte Bestromung der Hauptspule ist es wichtig, dass diese in einer bestimmten Winkelposition des magnetischen Feldes des Rotors passend zu der Phase der Versorgungsspannung erfolgt, so dass ein weiterer Drehmomentpuls in der richtigen Richtung auf den Rotor wirkt und dieser nicht wieder abgebremst wird. D. h. die Winkelposition des Rotors wird so bestimmt, dass die Hauptwicklung mit der richtigen Phase der Versorgungsspannung im richtigen Moment bestromt wird, um den Rotor weiter zu beschleunigen.

Dabei wird vorzugsweise die Winkelposition des Rotorfeldes bzw. des magnetischen Feldes des Rotors indirekt über die induzierte Gegenspannung in der Hauptspule erfasst. Dazu wertet die Starteinrichtung charakteristische Größen der induzierten Gegenspannung aus. Die Bestromung der Hauptwicklung erfolgt in der vierten Halbperiode vorzugsweise wieder nur für ein bestimmtes Zeitintervall, danach wird sie wieder abgeschaltet, so dass auch hier nur ein Drehmomentimpuls in der gewünschten Richtung erzeugt wird.

Die Starteinrichtung ist ferner zweckmäßigerweise so ausgebildet, dass nach dem Einschalten der Bestromung der Hauptwicklung in einer nachfolgenden Halbperiode die Bestromung der Hilfswicklung für ein bestimmtes Zeitintervall eingeschaltet wird, so dass ein weiterer Drehmomentpuls auf den Rotor wirkt.

Die bestimmten Zeitintervalle, in denen die Bestromung der Haupt- und/oder Hilfswicklungen gemäß der vorangehenden Beschreibung eingeschaltet wird, sind jeweils vorzugsweise gleich oder kürzer als die Dauer einer Halbperiode der Versorgungsspannung. Auf diese Weise wird sichergestellt, dass die Bestromung immer nur mit einer gleichgerichteten Phase, d. h. immer mit dem gleichen Vorzeichen erfolgt, so dass das von den Spulen erzeugte magnetische Feld immer gleichgerichtet ist und somit auch das auf den Rotor wirkende Drehmoment immer gleichgerichtet ist und der Rotor somit in der gewünschten Richtung in Drehung versetzt werden kann. Durch die bevorzugte Verwendung von Triacs als elektronische Schalter, kann diese Länge der Zeitintervalle sehr einfach realisiert werden, da die Triacs nach dem Schließen automatisch beim nächsten Nulldurchgang des Stromes wieder öffnen und somit die Bestromung der zugehörigen Haupt- und /oder Hilfswicklung unterbrechen.

Weiter bevorzugt analysiert die Starteinrichtung zur Bestimmung der Winkelposition die induzierte Gegenspannung in der Hauptwicklung in zwei Zeitpunkten. Dies ermöglicht allein durch Betrachtung der induzierten Gegenspannung in einer Wicklung, nämlich in der Hauptwicklung die Winkelposition des Rotorfeldes zu bestimmen, so dass auf eine Überwachung bzw. Analyse der induzierten Gegenspannung in der Hilfswicklung verzichtet werden kann. Die Erfassung zu zwei unterschiedlichen Zeitpunkten ermöglicht genau die Bestimmung des zeitlichen Verlaufes und der Steigung der induzierten Gegenspannung. Alternativ kann auch nur in der Hilfswicklung die induzierte Gegenspannung in entsprechender Weise erfasst werden.

Gemäß einer besonders bevorzugten Ausführungsform der Erfindung ist die Starteinrichtung derart ausgebildet, dass sie die vorangehend beschriebene Bestromung der Hauptwicklung in der vierten Halbperiode einschaltet, wenn nachfolgende drei die vorbestimmte Winkelposition des Rotorfeldes relativ zum Phasenwinkel der Versorgungsspannung charakterisierende Bedingungen erfüllt sind. Die erste Bedingung ist, dass der Gradient bzw. die Steigung der in der Hauptwicklung induzierten Gegenspannung ein umgekehrtes Vorzeichen wie die Versorgungsspannung hat. Diese Betrachtung erfolgt in der oben genannten dritten Halbperiode. Die zweite Bedingung ist diejenige, dass nach dem folgenden Nulldurchgang der Versorgungsspannung, d. h. in der vierten Halbperiode, die in der Hauptwicklung induzierte Gegenspannung dasselbe Vorzeichen wie die Versorgungsspannung hat. Die dritte Bedingung ist, dass in der vierten Halbperiode der Betrag der in der Hauptwicklung induzierten Gegenspannung kleiner als der Betrag der Versorgungsspannung ist. Durch diese dritte Bedingung wird sichergestellt, dass die Spannung das richtige Vorzeichen hat. Durch die genannten drei Bedingungen wird überprüft, dass das magnetische Feld des Rotors und die Phase der Versorgungsspannung beim Einschalten der Bestromung der Hauptwicklung so in der gewünschten Beziehung zueinander stehen, dass die Hauptwicklung im richtigen Zeitpunkt mit dem richtigen Vorzeichen bestromt wird, um ein auf den Rotor in der gewünschten Drehrichtung wirkendes Drehmoment zu erzeugen.

Die dritte und vierte Halbperiode der Versorgungsspannung bei den vorangehend beschriebenen Schritten sind vorzugsweise zwei direkt aufeinanderfolgende Halbperioden.

Weiterhin ist die Starteinrichtung vorzugsweise so ausgebildet, dass sie zum Starten des Tauchmotors in dem Fall, dass die zum Einschalten der Bestromung der Hauptspule erforderliche Winkelposition des Rotorfeldes nicht gegeben ist, die vorangehend beschriebene Analyse der induzierten Gegenspannung so lange fortsetzt, bis die vorbestimmte Winkelposition zum Einschalten der Bestromung der Hauptwicklung gegeben ist, und dann die Bestromung der Hauptwicklung einschaltet. Dadurch ist sichergestellt, dass die Starteinrichtung irgendwann den richtigen Zeitpunkt, in dem die richtige Winkelposition des Rotorfeldes gegeben ist, erfasst und dann die Bestromung der Hauptwicklung einschaltet, um einen Drehmomentimpuls auf den Rotor zu erzeugen.

Ferner ist die Starteinrichtung zweckmäßigerweise derart ausgebildet, dass das Einschalten der Bestromung der Hauptwicklung bei Erfassung der vorbestimmten Winkelposition und vorzugsweise das nachfolgende Einschalten der Bestromung der Hilfswicklung so lange periodisch wiederholt wird, bis der Startvorgang des Tauchmotors beendet ist. Auf diese Weise wird mehrmals hintereinander ein auf den Rotor wirkender Drehmomentimpuls erzeugt, welcher den Rotor beschleunigt. Dieser Startvorgang wird solange fortgesetzt, bis eine gewünschte Drehzahl des Tauchmotors erreicht ist. Diese Drehzahl kann beispielsweise im Bereich zwischen 40 und 70% der Nenndrehzahl liegen. So kann z. B. beim Erreichen dieser Drehzahl wird der von der Starteinrichtung gesteuerte Startvorgang beendet werden und der Motor geht in den normalen Betrieb über. Die Beendigung des Startvorganges kann entweder nach einer bestimmten Zeitspanne, in der normalerweise die gewünschte Drehzahl des Motors erreicht wird, abgeschaltet werden oder es kann die tatsächliche Drehzahl des Motors über Sensoren oder beispielsweise über den Verlauf der induzierten Gegenspannung erfasst werden und der Startvorgang beim Erreichen einer bestimmten Drehzahl beendet werden.

Ein erfindungsgemäßes Startverfahren, welches von der Starteinrichtung gesteuert wird, läuft besonders bevorzugt in der Weise ab, dass zunächst kurz die Hauptwicklung bestromt wird, um den noch stillstehenden Rotor zu magnetisieren. Anschließend wird zu Beginn einer nachfolgenden Halbperiode, d. h. vorzugsweise eine Halbperiode mit umgekehrten Vorzeichen der Versorgungsspannung, kurzzeitig die Hilfswicklung bestromt, um einen ersten Drehmomentimpuls, welcher auf den Rotor wirkt, zu erzeugen. Dadurch wird der Rotor in Rotation versetzt. Dieser Drehmomentimpuls kann alternativ auch dadurch erzeugt werden, dass zunächst die Magnetisierung des Rotors durch eine Bestromung der Hilfswicklung erfolgt und anschließend die Hauptwicklung bestromt wird, um den Drehmomentimpuls zu erzeugen.

Anschließend erfolgt die vorangehend beschriebene Analyse bzw. Betrachtung der induzierten Gegenspannung, um eine im Verhältnis zum Phasenverlauf der Versorgungsspannung geeignete Winkelposition des Rotormagnetfeldes zu erfassen, bei welcher die Hauptwicklung erneut bestromt wird, um einen weiteren auf den Rotor in der gleichen Richtung wirkenden Drehmomentimpuls zu erzeugen. Anschließend wird in der darauf folgenden Halbperiode bei umgekehrten Vorzeichen der Versorgungsspannung kurzzeitig die Hilfswicklung bestromt, um einen weiteren Drehmomentimpuls zu erzeugen. Diese Bestromung der Hauptwicklung und die darauf folgende Bestromung der Hilfswicklung wird mehrfach wiederholt, bis, wie vorangehend beschrieben, eine gewünschte Drehzahl des Motors erreicht oder eine bestimmte Zeitdauer für den Startvorgang abgelaufen ist.

Der elektronische Schalter im Stromkreis der Hauptwicklung bietet ferner den Vorteil, dass er optional noch weitere Funktionen bei der Steuerung bzw. Regelung des Tauchmotors übernehmen kann. So kann der elektronische Schalter im Stromkreis der Hauptwicklung beispielsweise zusätzlich für eine Phasenanschnittsteuerung zur Anpassung des Tauchmotors an unterschiedliche Versorgungsspannungen genutzt werden, so dass beispielsweise ein und derselbe Tauchmotor wahlweise mit 230 Volt oder 110 Volt Versorgungsspannung betrieben werden kann. Dabei wird in bekannter Weise der Motor vorzugsweise für die niedrigste mögliche Versorgungsspannung ausgelegt und eine eventuelle höhere Versorgungsspannung durch die Phasenanschnittsteuerung reduziert. Ferner ist es beispielsweise möglich, den elektronischen Schalter als Überspannungsschutz für den Tauchmotor einzusetzen. Ferner kann beispielsweise in Kombination mit einem Temperatursensor auch eine Abschaltung der Bestromung bei Überhitzung des Tauchmotors durchgeführt werden. Für diese Zusatzfunktionen arbeitet der elektronische Schalter mit einer Steuer- bzw. Regeleinrichtung für den Betrieb des Tauchmotors zusammen, in welche vorzugsweise auch die beschriebene Starteinrichtung integriert ist. Auf diese Weise kann bei einem einfachen Aufbau der Steuerung des Motors eine Vielzahl von Funktionen realisiert werden.

Gemäß einer besonderen Ausführungsform der Erfindung kann im Stromkreis der Hilfswicklung eine dem elektronischen Schalter parallel geschaltete, vorzugsweise im Motor angeordnete Kapazität mit einem weiteren elektronischen Schalter vorgesehen sein, wobei die Starteinrichtung oder eine Steuereinrichtung derart ausgebildet ist, dass über den weiteren elektronischen Schalter nach Abschluss des Startvorganges die Hilfswicklung über die Kapazität bestrombar ist. So ist es möglich, den Motor nach dem vorangehend beschriebenen Verfahren zu starten und anschließend den Motor als Kondensatormotor mit Betriebskondensator (capacitor-run-motor) zu betreiben. Die erforderliche Kapazität wird vorzugsweise im Inneren des Motors nahe an der Wicklung angeordnet. Als Betriebskondensator können möglicherweise auch Kondensatoren ohne Elektrolyt zu verwenden, so dass die Anordnung des Betriebskondensators im Tauchmotor selber für viele Anwendungsfälle unproblematisch ist, in welchen jedoch die Anordnung eines Elektrolytkondensators als Startkondensator im Tauchmotor selber unerwünscht ist.

Die Starteinrichtung ist vorzugsweise in einem Gehäuse des Tauchmotors an einer zum Anschluss einer Pumpe vorgesehenen Axialseite des Motors, d. h. am wellenseitigen Wicklungskopf des Tauchmotors angeordnet. In diesem Bereich ist vorzugsweise auch der Anschluss, insbesondere ein Anschlussstecker für die elektrische Versorgungsleitung des Tauchmotors vorgesehen. So kann ein kompakter Aufbau des Tauchmotors erreicht werden.

Die Steuerung des Startvorganges über die elektronischen Schalter in der vorangehend beschriebenen Weise bzw. gemäß der vorangehend beschriebenen Ausführungsformen ermöglicht ferner gemäß einer besonderen Ausführungsform der Erfindung, das Startmoment beim Anlaufen des Motors zu beeinflussen. So ist es möglich, den. Motor zunächst mit einem geringen Startmoment anlaufen zu lassen und das Startmoment nur in dem Fall zu erhöhen, dass der Motor nicht wie gewünscht anlaufen sollte. Auf diese Weise werden die beim Anlaufen des Motors auftretenden Drehmomentstöße, welche auf die angeschlossene Pumpe wirken, reduziert. Dies führt zu geringeren Belastungen der drehmomentübertragenden Teile, so dass der Verschleiß dieser Teile und der Pumpe beim Anlaufen minimiert werden kann. Ferner kann auf diese Weise auch die Geräuschentwicklung beim Anlaufen verringert werden, was insbesondere beim Einsatz des Tauchmotors in einem Hauswasserwerk von Bedeutung ist.

Die Verringerung des Startmomentes kann dadurch erreicht werden, dass die Zeitintervalle, in welchen die Hilfs- und/oder die Hauptwicklung zur Erzeugung der Drehmomentimpulse auf den Rotor bestromt werden, verkürzt werden. Eine solche Verkürzung kann bevorzugt durch späteres Einschalten der elektronischen Schalter zur Bestromung der Haupt- und der Hilfswicklung erfolgen. Dies hat den Vorteil, dass der automatische Ausschaltzeitpunkt beispielsweise bei Verwendung eines Triacs unbeeinflusst bleibt. Alternativ oder zusätzlich kann die Dauer der Bestromung auch durch ein früheres Ausschalten der elektronischen Schalter erreicht werden.

Nachfolgend wird die Erfindung beispielhaft anhand der beigefügten Figuren beschrieben. In diesen zeigt:
- Fig. 1: einen schematischen Schaltplan einer ersten Ausführungs- form der Starteinrichtung des erfindungsgemäßen Tauch- motors,
- Fig. 2: einen schematischen Schaltplan einer zweiten Ausfüh- rungsform der Starteinrichtung des erfindungsgemäßen Tauchmotors,
- Fig. 3: einen schematischen Schaltplan einer dritten Ausführungs- form der Starteinrichtung des erfindungsgemäßen Tauch- motors,
- Fig. 4: ein Diagramm, in welchem Spannungsverlauf, Drehzahl und Drehmoment während des Startvorganges dargestellt sind,
- Fig. 5: eine Schnittansicht eines erfindungsgemäßen Tauchmo- tors und
- Fig. 6: eine Draufsicht auf den Tauchmotor gemäß Fig. 5.

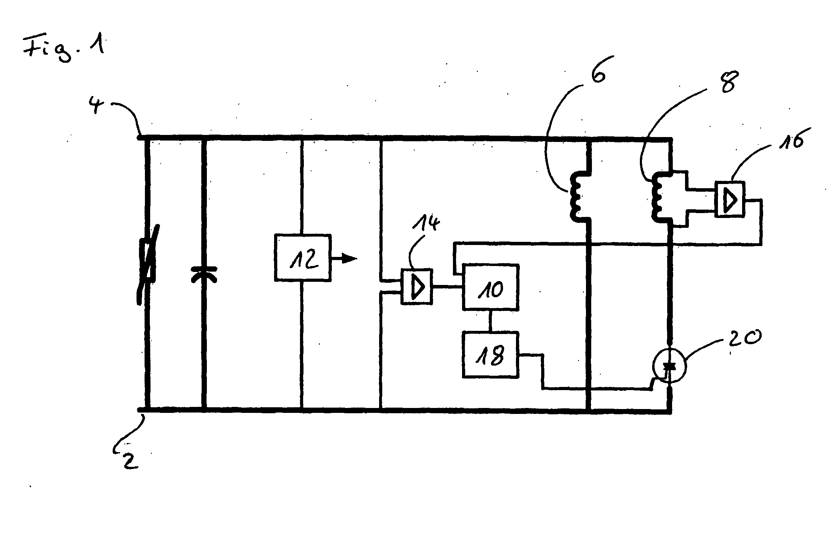

Fig. 1 zeigt schematisch den Schaltplan des Tauchmotors gemäß einer ersten Ausführungsform der Erfindung. Zwischen den zwei Polen 2 und 4 der Versorgungsspannung, d. h. einem Neutralleiter 2 und der Phase 4 sind eine Hauptwicklung 6 und eine Hilfswicklung 8 des Tauchmotors geschaltet.

Die Starteinrichtung, welche die Bestromung der Wicklungen bzw. Spulen des Tauchmotors im Startvorgang steuert, weist als wesentliches Element einen Controler bzw. eine Steuereinrichtung 10 auf, welche über eine Energieversorgung 12 über die Anschlusspole 2 und 4 des Tauchmotors mit Strom versorgt wird, wobei die Energieversorgungseinrichtung 12 die für die Steuereinrichtung 10 erforderliche Gleichspannung bereitstellt. Die Steuereinrichtung 10 ist mit zwei Erfassungseinrichtungen 14 und 16 verbunden, von denen die Erfassungseinrichtung 14 die Spannung zwischen den Polen 2 und 4, d. h. die Versorgungsspannung, erfasst und die Erfassungseinrichtung 16 die Spannung über der Hilfswicklung 8 erfasst. Die Erfassungseinrichtung 16 erfasst dabei die in der Hilfswicklung 8 durch den magnetisierten, sich drehenden Rotor induzierte Gegenspannung. Die Steuereinrichtung 10 wertet den Verlauf der zwischen den Polen 2 und 4 anliegenden Versorgungsspannung sowie den Verlauf der über der Hilfswicklung 8 anliegenden induzierten Gegenspannung aus und steuert darüber, wie später genauer beschrieben werden wird, die Bestromung der Hilfswicklung 8. Dazu ist die Steuereinrichtung 10 mit einer Ansteuereinheit 18 verbunden, welche einen im Zweig bzw. Stromkreis der Hilfswicklung 8 zwischen den Polen 2 und 4 gelegenen elektronischen Schalter 20 in Form eines Triacs ansteuert. Durch Öffnen und Schließen des elektronischen Schalters 20 durch Betätigung der Ansteuereinheit 18 kann die Steuereinrichtung in Abhängigkeit der von den Erfassungseinrichtungen 14 und 16 erfassten Spannungsverläufen zwischen den Polen 2 und 4 und über der Hilfswicklung 8 die Bestromung der Hilfswicklung 8 steuern. So kann die Steuereinrichtung 12 die Bestromung der Hilfswicklung 8 immer genau dann einschalten, wenn die Phase bzw. der Phasenwinkel der Versorgungsspannung in einem bestimmten Verhältnis zur Winkelposition des Rotormagnetfeldes steht, so dass auf den Rotor ein Drehmomentimpuls erzeugt wird, um den Rotor in Bewegung zu versetzen.

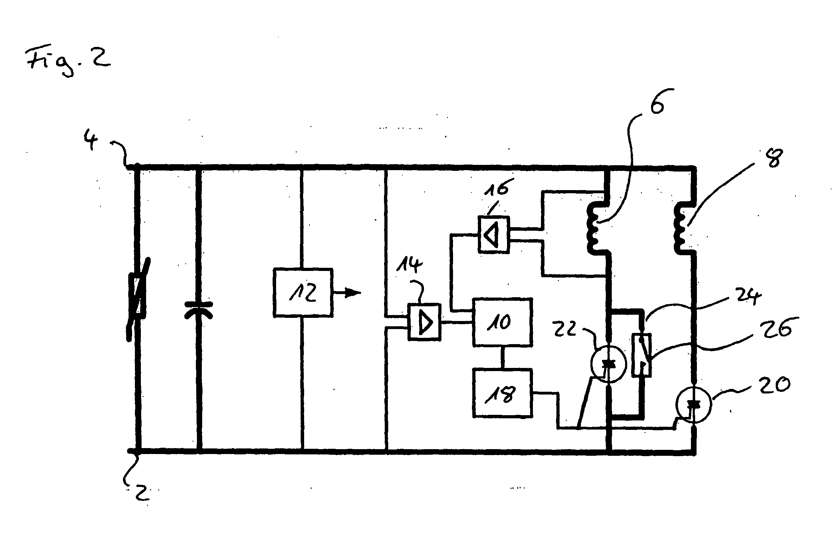

Fig. 2 zeigt einen schematischen Schaltplan eines Tauchmotors gemäß einer zweiten Ausführungsform der Erfindung. Die Anordnung entspricht in vielen Teilen der anhand von Fig. 1 beschriebenen Anordnung, so dass nachfolgend nur die Unterschiede beschrieben werden. Der erste wesentliche Unterschied zu der Ausführungsform gemäß Fig. 1 liegt darin, dass bei der zweiten Ausführungsform von der Erfassungseinrichtung 16 nicht die induzierte Gegenspannung in der Hilfswicklung 8, sondern die induzierte Gegenspannung in der Hauptwicklung 6 erfasst wird, dazu greift die Erfassungseinrichtung 16 die Spannung über der Hauptwicklung 6 ab. Auch die in der Hauptwicklung 6 induzierte Gegenspannung kann dazu genutzt werden, die Winkelposition des Rotormagnetfeldes zu bestimmen. Ein weiterer Unterschied liegt darin, dass auch im Zweig bzw. Stromkreis der Hauptwicklung 6 zwischen den Polen 2 und 4 ein elektronischer Schalter 22 angeordnet ist. Auch dieser. Schalter 22 ist als Triac ausgebildet. Auch der elektronische Schalter 22 wird von der Ansteuereinheit 18, welche Steuerbefehle von der Steuereinrichtung 10 empfängt, angesteuert. Zusätzlich ist eine Überbrückung 24 vorgesehen, welche den elektronischen Schalter 22 überbrücken kann. In der Überbrückung 24 ist ein Schalter 26 in Form eines Relais angeordnet, welcher ebenfalls von der Steuereinrichtung 10 oder einer zentralen Steuereinrichtung für die Motorsteuerung angesteuert wird.

Diese zweite Ausführungsform ermöglicht, dass die Steuereinrichtung 10 sowohl die Bestromung der Hilfswicklung 8 als auch die Bestromung der Hauptwicklung 6 zum Starten des Tauchmotors gezielt einschaltet, um die Hauptwicklung 6 und die Hilfswicklung 8 in Abhängigkeit von der erfassten Winkelposition des Rotormagnetfeldes zum richtigen Zeitpunkt mit der richtigen Polarität der Versorgungsspannung, d. h. mit der richtigen Phase der Versorgungsspannung zu bestromen, um Drehmomentimpulse, welche auf den Rotor zu dessen Beschleunigung wirken, zu erzeugen. Nach Abschluss des Startvorganges, d. h. wenn der Tauchmotor eine bestimmte Drehzahl erreicht hat, bleibt de elektronische Schalter 20 geöffnet, so dass die Hilfswicklung 8 nicht weiter bestromt wird. Der Schalter 26 wird dann geschlossen, um den elektronischen Schalter 22, welcher dann ebenfalls geöffnet ist, zu überbrücken und die Hauptwicklung 6 dauerhaft mit der zwischen den Polen 2 und 4 anliegenden Versorgungsspannung zu bestromen.

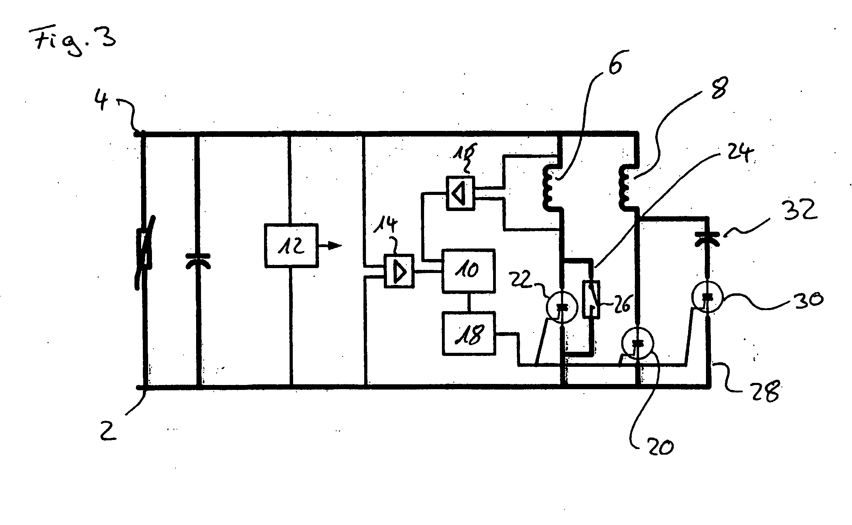

Fig. 3 zeigt den Schaltplan eines Tauchmotors gemäß einer dritten Ausführungsform der Erfindung. Diese dritte Ausführungsform entspricht im Wesentlichen der anhand von Fig. 2 erläuterten Ausführungsform, so dass nachfolgend nur die Unterschiede erläutert werden. Die dritte Ausführungsform unterscheidet sich von der Ausführungsform in Fig. 2 lediglich dadurch, dass eine weitere Überbrückung 28 vorgesehen ist, welche den elektronischen Schalter 20 im Zweig bzw. Stromkreis der Hilfswicklung 8 überbrückt. In der Überbrückung 28 sind ein weiterer elektronischer Schalter 30 sowie ein Kondensator 32 angeordnet.

Mit der Überbrückung 28 kann der Motor als Kondensatormotor mit Betriebskondensator (Kondensator 32) betrieben werden. Dazu wird nach Ende des Startvorganges der elektronische Schalter 20 von der Steuereinrichtung 10 über die Ansteuereinheit 18 geöffnet. Wie bereits beschrieben, wird auch der elektronische Schalter 22 geöffnet und stattdessen der Schalter 26 in der Überbrückung 24 geschlossen, um die Hauptwicklung 6 dauerhaft zu bestromen. Gleichzeitig wird zum normalen Betrieb des Motors nach Abschluss des Startvorganges von der Steuereinrichtung 10 über die Ansteuereinheit 18 der elektronische Schalter 30 geschlossen. Auf diese Weise wird auch die Hilfswicklung 8 über die Überbrückung 28 dauerhaft bestromt, wobei der Kondensator 32 als Betriebeskondensator im Stromkreis der Hilfswicklung 8 liegt. Der Betriebskondensator 32 kann als Kondensator ohne Elektrolyt ausgebildet werden, so dass dieser Kondensator 33 auch dort eingesetzt werden kann, wo kein Elektrolytkondensator im Pumpensumpf angeordnet werden darf. Der Kondensator 32 ist bevorzugt direkt in der Nähe der Hilfswicklung 8 im Inneren des Motors angeordnet.

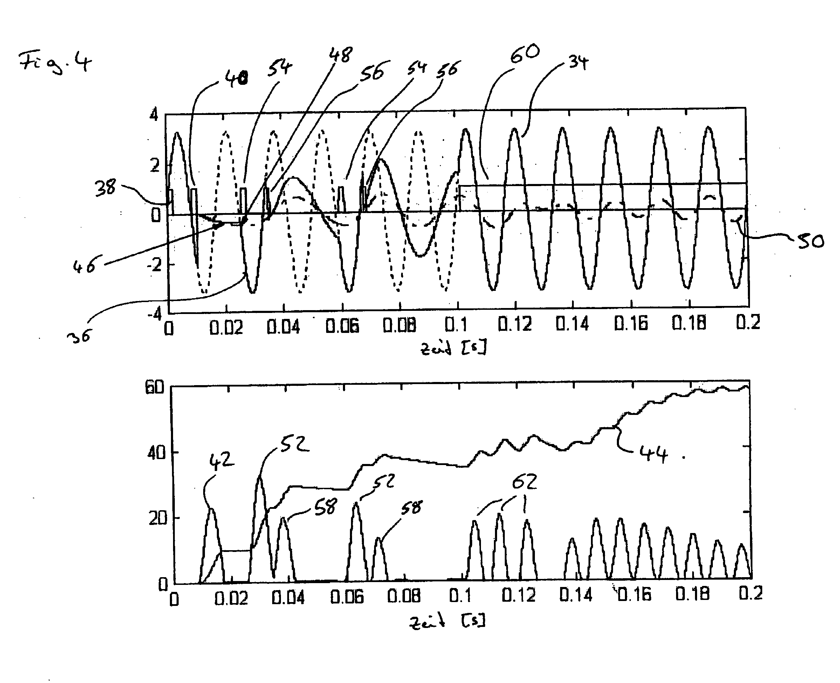

Der Startvorgang bzw. das Startverfahren, wie es bei den Ausführungsbeispielen gemäß der Figuren 2 und 3 zur Anwendung kommt, wird nun nachfolgend anhand der Diagramme in Fig. 4 näher beschrieben. In dem oberen Diagramm sind die Spannungsverläufe der Versorgungsspannung sowie der induzierten Spannung in der Hauptwicklung 6 in der Einheit V/100 als zeitlicher Verlauf dargestellt. Im unteren Teil des Diagramms sind der Drehmomentverlouf in der Einheit Nm sowie die Rotorgeschwindigkeit in Hz dargestellt.

Die mit gleichmäßiger Periode verlaufende mit durchgezogener Linie dargestellte Spannung ist der Phasenverlauf der Versorgungsspannung 34 zwischen den Polen 2 und 4. Im Bereich des Startvorganges ist der Verlauf 34 der Versorgungsspannung gestrichelt dargestellt. In diesem Bereich ist durch die durchgezogene Linie der Verlauf der induzierten Gegenspannung 36 in der Hauptwicklung 6 dargestellt. Ferner sind in dem oberen Teil des Diagramms die Steuerimpulse, welche von der Ansteuereinheit 18 zu den elektronischen Schaltern 20 und 22 abgegeben werden dargestellt. Zu Beginn des Verfahrens am Zeitpunkt Null ist der Rotor in Ruhe und direkt nach einem Nulldurchgang der Versorgungsspannung 34 wird durch den Schaltimpuls 38 der elektronische Schalter 22 geschlossen und auf diese Weise die Hauptwicklung 6 erstmalig bestromt. Dies führt zu einer ersten Magnetisierung des Rotors. Da die elektronischen Schalter 20, 22 als Triacs ausgebildet sind, endet diese Bestromung der Hauptspule mit dem nächsten Nulldurchgang des Versorgungsstromes. Nach dem nächsten Nulldurchgang der Versorgungsspannung 34 wird in der zweiten Halbperiode ein Schaltimpuls 40 von der Ansteuereinheit 18 auf Veranlassung der Steuereinrichtung 10 abgegeben, welche den elektronischen Schalter 20 schließt, so dass die Hilfswicklung 8 bestromt wird. Auch diese Bestromung der Hilfswicklung 8 endet mit dem nächsten Nulldurchgang der Versorgungsspannung 24, bei welchem der elektronische Schalter 20 automatisch wieder öffnet. Diese kurzzeitige Bestromung der Hilfswicklung 8 führt zu einem ersten Drehmomentimpuls 42, welcher im unteren Teil des Diagramms von Fig. 4 zu erkennen ist. Dieser erste Drehmomentimpuls 42 wirkt auf den zuvor magnetisierten Rotor, so dass dieser wie an dem Graph 44, welcher die Drehzahl des Rotors repräsentiert, zu erkennen ist, in Rotation versetzt wird. Die Bestromung der Hilfswicklung 8 in der zweiten Halbperiode muss nicht direkt auf die Halbperiode folgen, in welcher die Hauptwicklung 6 erstmalig bestromt wurde. Vielmehr kann diese Bestromung auch einige Halbperioden später erfolgen, wobei sichergestellt sein muss, dass die Magnetisierung des Rotors noch nicht abgeklungen ist und das Vorzeichen der Halbperiode vorzugsweise umgekehrt zu der ersten Halbperiode ist, in welcher die Hauptwicklung 6 erstmalig bestromt wurde.

In der nachfolgenden dritten Halbperiode erfolgt nun eine Analyse der in die Hauptwicklung 6 induzierten Gegenspannung 36, welche von der Erfassungseinrichtung 16 erfasst wird. Wenn der Gradient bzw. die Steigung der induzierten Gegenspannung 36 das entgegengesetzte Vorzeichen der Versorgungsspannung 34 hat, ist eine erste Bedingung zum erneuten Einschalten der Bestromung der Hauptwicklung 6 erfüllt. Dies ist am Punkt 46 der Fall. Die zweite Bedingung zum Einschalten der Bestromung der Hauptwicklung ist, dass nach dem nächsten Nulldurchgang der Versorgungsspannung 34, d. h. in der darauf folgenden Halbperiode die induzierte Gegenspannung 36 dasselbe Vorzeichen wie die Vorsorgungsspannung 34 hat. Dies ist am Punkt 48 der Fall. Gleichzeitig soll als dritte Bedingung der Betrag der induzierten Gegenspannung 36 kleiner als der Betrag der Versorgungsspannung 34 sein. Dies ist am Punkt 48 ebenfalls der Fall, so dass zu diesem Zeitpunkt durch Erfassen dieser drei Bedingungen festgestellt ist, dass der Phasenverlauf des Rotormagnetfeldes 50 an diesem Punkt im gewünschten Einklang mit dem Phasenverlauf der Versorgungsspannung 34 ist, d. h. beide von ihren Vorzeichen so gerichtet sind, dass bei einer Bestromung der Hauptspule 6 mit der Versorgungsspannung 34 ein weiterer Drehmomentpuls 52 erzeugt wird, welcher den Rotor weiter beschleunigt, wie an dem Graph 44 zu erkennen ist. Der weitere Drehmomentpuls 52 wird durch Erzeugen eines Schaltimpulses 54 bewirkt, welcher von der Ansteuereinheit 18 zum Schließen des elektronischen Schalters 22 abgegeben wird.

In der darauf folgenden Halbperiode, d. h. nach dem nächsten Nulldurchgang der Versorgungsspannung 34 wird ein weiterer Schaltimpuls 56 zu dem elektronischen Schalter 20 abgegeben, so dass die Hilfswicklung 8 mit entgegengesetztem Vorzeichen der Versorgungsspannung 34 bestromt wird und so ein weiterer Drehmomentimpuls 58 auf den Rotor erzeugt wird, so dass dieser weiter beschleunigt wird. Die Schaltimpulse 54 und 56 bewirken ein Schließen der elektronischen Schalter 22 und 20, die Schalter öffnen automatisch wieder beim nächsten Nulldurchgang des Stromes.

Die beschriebene Analyse der induzierten Gegenspannung 36 im Verhältnis zum Phasenverlauf der Versorgungsspannung 34 wird nachfolgend mehrfach wiederholt, so dass immer, wenn wieder die gleichen Bedingungen des Verhältnisses der Versorgungsspannung 34 zum Phasenverlauf des Rotormagnetfeldes 50 gegeben sind, erneut die Schaltimpulse 54 und 56 zum Schließen der elektronischen Schalter 22 bzw. 20 abgegeben werden, wodurch erneute Drehmomentpulse 52 und 58 abgegeben werden. Die Drehmomentpulse 52 und 58, welche durch Bestromung der Hauptwicklung 6 und der Hilfswicklung 8 erzeugt werden, sind alle gleichgerichtet, so dass der Rotor weiter beschleunigt wird.

Wenn die Rotordrehzahl ein bestimmtes Niveau erreicht hat, wird der Startvorgang beendet und durch den dauerhaften Schaltimpuls 60, welcher in dem Diagramm bei 0,1 Sekunden einsetzt, der Schalter 26, im Stromkreis der Hauptwicklung 6 geschlossen, so dass diese dauerhaft bestromt wird. Dadurch werden dann regelmäßige Drehmomentimpulse im normalen bekannten Betrieb des Asynchronmotors erzeugt, so dass der Rotor weiter auf die dann konstante Nenndrehzahl beschleunigt wird, wie am Verlauf des Graphen 44 zu erkennen ist.

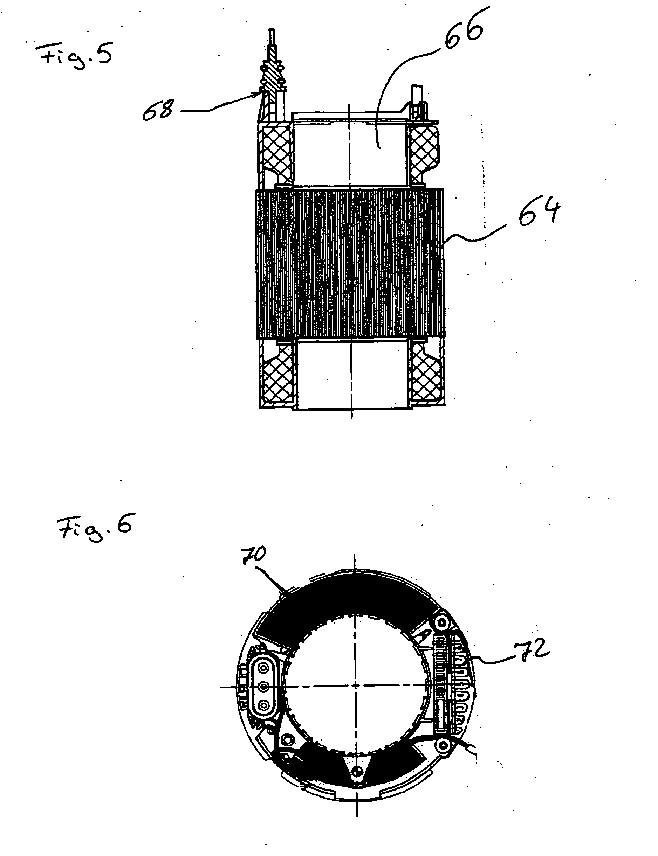

Figuren 5 und 6 zeigen ein Beispiel für den konstruktiven Aufbau des erfindungsgemäßen Tauchmotors. In der teilweise geschnittenen Ansicht in Fig. 5 ist der Stator 64 dargestellt, der Rotor ist nicht gezeigt und wird in die zentrale Öffnung 66 des Stators eingesetzt. Am in Fig. 5 oberen Ende des Stators 64 schließt sich eine an den Tauchmotor anzusetzende Tauchpumpe an (hier nicht gezeigt), dieses Ende wird als der wellenseitige Wicklungskopf des Stators 64 bezeichnet. An diesem Ende ist nahe dem Außenumfang des Stators 64 ein sich axialseits erstreckender Anschlussstecker 68 ausgebildet, an welchem die Versorgungsleitung für den Tauchmotor angeschlossen wird. Im Bereich des wellenseitigen Wicklungskopfes ist auch eine Leiterplatte 70 angeordnet (siehe Fig. 6) auf welcher die elektronischen Bauteile der zuvor beschriebenen Starteinrichtung 10 angeordnet sind. Diametral entgegengesetzt zu dem Anschlussstecker 68 sind die Anschlussklemmen 72 für die Spulendrähte des Motors angeordnet. Diese Anordnung der Elektronik für die Starteinrichtung bzw. Steuereinrichtung 10 des Tauchmotors führt zu einem kompakten Aufbau des erfindungsgemäßen Tauchmotors.

Für die Verwendung der vorangehend beschriebenen Starteinrichtung sowie die Ausführung des beschriebenen Startverfahrens werden die Wicklungen des Motors vorzugsweise speziell angepasst. Die Hauptwicklung 6 wird dabei vorzugsweise gegenüber üblichen Asynchronmotoren mit herkömmlicher Starteinrichtung (Kondensator oder Widerstand) nicht verändert. Die Hilfswicklung 8 wird jedoch vorzugsweise so angepasst, dass der Startstrom sowie eine Erwärmung des Motors während des Startvorganges in akzeptablen Grenzen bleiben. Besonders bevorzugt wird die Hilfswicklung 8 dabei so ausgelegt, dass sie 50 bis 80% der Wicklungen der Hauptwicklung 6, weiter bevorzugt zwischen 60 und 75% der Wicklungen der Hauptwicklung 6 aufweist.

### Bezugszeichenliste

- 2, 4: Pole
- 6: Hauptwicklung
- 8: Hilfswicklung
- 10: Steuereinrichtung
- 12: Energieversorgungseinrichtung
- 14, 16: Erfassungseinrichtung
- 18: Ansteuereinheit
- 20, 22: elektronische Schalter
- 24: Überbrückung
- 26: Schalter
- 28: Überbrückung
- 30: elektronischer Schalter
- 33: Kondensator
- 34: Phasenverlauf der Versorgungsspannung
- 36: Phasenverlauf der induzierten Gegenspannung
- 38, 40: Schaltimpulse
- 42: Drehmomentpuls
- 44: Drehzahl
- 46, 48: Zeitpunkt
- 50: Phasenverlauf des Rotormagnetfeldes
- 52: Drehmomentpuls
- 54, 56: Schaltimpulse
- 58: Drehmomentpuls
- 60: Schaltimpuls
- 62: Drehmomentpulse
- 64: Stator
- 66: Öffnung
- 68: Stecker
- 70: Leiterplatte
- 72: Anschlussklemmen

## Patentansprüche

1. Tauchmotor für eine Tauchpumpe, welcher als einphasiger Asynchronmotor ausgebildet ist und eine Hauptwicklung (6), eine Hilfswicklung (8) sowie eine Starteinrichtung (10, 14, 16, 18, 20, 22) zur Steuerung des Startvorganges des Tauchmotors aufweist, wobei die Starteinrichtung (10, 14, 16, 18, 20, 22) zur Steuerung der Bestromung der Hilfswicklung (8) während der Startphase zumindest einen elektronischen Schalter (20) im Stromkreis der Hilfswicklung (8) aufweist, **dadurch gekennzeichnet, dass** der elektronische Schalter (20) derart betätigbar ist, dass die Bestromung der Hilfswicklung auf die Winkelposition des elektromagnetischen Feldes eines Rotors abgestimmt ist.

2. Tauchmotor nach Anspruch 1, **dadurch gekennzeichnet, dass** die Starteinrichtung (10, 14, 16, 18, 20, 22) zur Steuerung der Bestromung der Hauptwicklung (6) einen elektronischen Schalter (22) im Stromkreis der Hauptwicklung(6) aufweist.

3. Tauchmotor nach Anspruch 1 oder 2, **dadurch gekennzeichnet, dass** der elektronische Schalter (20, 22) ein Triac ist.

4. Tauchmotor nach einem der Ansprüche 1 bis 3, **dadurch gekennzeichnet, dass** die Starteinrichtung (10, 14, 16, 18, 20, 22) derart ausgebildet ist, dass sie zum Starten des Tauchmotors zumindest einen charakteristischen Wert der induzierten Gegenspannung (36) in der Hauptwicklung (6) und/oder in der Hilfswicklung (8) erfasst und die Bestromung der Haupt (6)- und/oder der Hilfswicklung (8) in Abhängigkeit dieses Wertes steuert.

5. Tauchmotor nach einem der vorangehenden Ansprüche, **dadurch gekennzeichnet, dass** die Starteinrichtung (10, 14, 16, 18, 20, 22) derart ausgebildet ist, dass sie zum Starten des Tauchmotors zumindest einen charakteristischen Wert einer Versorgungsspannung (34) des Tauchmotors erfasst und die Bestromung der Haupt (6)- und/oder der Hilfswicklung (8) in Abhängigkeit dieses Wertes steuert.

6. Tauchmotor nach einem der vorangehenden Ansprüche, **dadurch gekennzeichnet, dass** die Starteinrichtung (10, 14, 16, 18, 20, 22) derart ausgebildet ist, dass sie zum Starten des Tauchmotors die Bestromung der Hilfs- oder der Hauptwicklung (6), vorzugsweise der Hauptwicklung (6), nach einem erfassten Nulldurchgang einer Versorgungsspannung (34), vorzugsweise für ein bestimmtes Zeitintervall, einschaltet.

7. Tauchmotor nach Anspruch 6, **dadurch gekennzeichnet, dass** die Starteinrichtung (10, 14, 16, 18, 20, 22) derart ausgebildet ist, dass sie zum Starten des Tauchmotors in einer dem ersten Einschalten (38) der Bestromung der Hilfs- oder der Hauptwicklung (6) nachfolgenden zweiten Halbperiode der Versorgungsspannung (34) die Bestromung der Haupt- oder Hilfswicklung (8), vorzugsweise der Hilfswicklung, für ein bestimmtes Zeitintervall einschaltet.

8. Tauchmotor nach Anspruch 7, **dadurch gekennzeichnet, dass** die Starteinrichtung (10, 14, 16, 18, 20, 22) derart ausgebildet ist, dass sie zum Starten des Tauchmotors in einer dem Einschalten (38) der Bestromung der Hauptwicklung (6) und der Hilfswicklung (8) nachfolgenden dritten Halbperiode der Versorgungsspannung (34) eine Winkelposition des Rotorfeldes (50) im Verhältnis zur Versorgungsspannung (34) durch Analyse der induzierten Gegenspannung (36) in der Hauptwicklung (6) ermittelt und bei Erfassung einer vorbestimmten Winkelposition (50) die Bestromung der Hauptwicklung (6) in einer nachfolgenden vierten Halbperiode der Versorgungsspannung (34) für ein bestimmtes Zeitintervall einschaltet.

9. Tauchmotor nach Anspruch 8, **dadurch gekennzeichnet, dass** die Starteinrichtung (10, 14, 16, 18, 20, 22) derart ausgebildet ist, dass nach dem Einschalten der Bestromung der Hauptwicklung (6) in einer nachfolgenden Halbperiode die Bestromung der Hilfswicklung (8) für ein bestimmtes Zeitintervall eingeschaltet wird.

10. Tauchmotor nach einem oder mehreren der Ansprüche 6 bis 9, **dadurch gekennzeichnet, dass** das bestimmte Zeitintervall gleich oder kürzer als die Dauer einer Halbperiode der Versorgungsspannung (34) ist.

11. Tauchmotor nach einem der Ansprüche 8 bis 10, **dadurch gekennzeichnet, dass** die Starteinrichtung (10, 14, 16, 18, 20, 22) zur Bestimmung der Winkelposition die induzierte Gegenspannung (36) in der Hauptwicklung in zwei Zeitpunkten (46, 48) analysiert.

12. Tauchmotor nach einem der Ansprüche 8 bis 11, **dadurch gekennzeichnet, dass** die Starteinrichtung (10, 14, 16, 18, 20,22) derart ausgebildet ist, dass sie die Bestromung der Hauptwicklung (6) in der vierten Halbperiode einschaltet, wenn folgende drei die vorbestimmte Winkelposition charakterisierende Bedingungen erfüllt sind:
a) die Steigung der in der Hauptwicklung (6) induzierten Gegenspannung (36) hat ein umgekehrtes Vorzeichen wie die Versorgungsspannung (34),
b) nach dem folgenden Nulldurchgang der Versorgungsspannung (34) hat in der vierten Halbperiode die in der Hauptwicklung (6) induzierte Gegenspannung (36) dasselbe Vorzeichen wie die Versorgungsspannung (34),
c) in der vierten Halbperiode ist der Betrag der in der Hauptwicklung (6) induzierten Gegenspannung (36) kleiner als der Betrag der Versorgungsspannung (34).

13. Tauchmotor nach einem der Ansprüche 8 bis 12, **dadurch gekennzeichnet, dass** die dritte und vierte Halbperiode der Versorgungsspannung (34) zwei direkt aufeinander folgende Halbperioden sind.

14. Tauchmotor nach einem der Ansprüche 8 bis 13, **dadurch gekennzeichnet, dass** die Starteinrichtung (10, 14, 16, 18, 20, 22) derart ausgebildet ist, dass sie zum Starten des Tauchmotors in dem Fall, dass die zum Einschalten der Bestromung der Hauptwicklung (6) erforderliche Winkelposition des Rotorfeldes (50) nicht gegeben ist, die Analyse der induzierten Gegenspannung (36) so lange fortsetzt, bis die vorbestimmet Winkelposition gegeben ist, und dann die Bestromung der Hauptwicklung (6) einschaltet.

15. Tauchmotor nach einem der Ansprüche 8 bis 14, **dadurch gekennzeichnet, dass** die Starteinrichtung (10, 14, 16, 18, 20, 22) derart ausgebildet ist, dass das Einschalten (54) der Bestromung der Hauptwicklung (6) bei Erfassung der vorbestimmten Winkelposition und vorzugsweise das nachfolgende Einschalten (56) der Bestromung der Hilfswicklung (8) solange periodisch wiederholt wird, bis der Startvorgang des Tauchmotors beendet ist.

16. Tauchmotor nach einem der Ansprüche 2 bis 15, **dadurch gekennzeichnet, dass** der elektronische Schalter (22) im Stromkreis der Hauptwicklung (6) zusätzlich für eine Phasenanschnittsteuerung zur Anpassung des Tauchmotors an unterschiedliche Versorgungsspannungen und/oder als Überspannungsschutz und/oder in Kombination mit einem Temperatursensor zur Abschaltung der Bestromung bei Überhitzung des Tauchmotors verwendet wird.

17. Tauchmotor nach einem der vorangehenden Ansprüche, **dadurch gekennzeichnet, dass** im Stromkreis der Hilfswicklung (8) eine dem elektronischen Schalter (20) parallel geschaltete, vorzugsweise im Motor angeordnete, Kapazität (32) mit einem weiteren elektronischen Schalter (30) vorgesehen ist, wobei die Starteinrichtung (10, 14, 16, 18, 20, 22) oder eine Steuereinrichtung derart ausgebildet ist, dass über den weiteren elektronischen Schalter (30) nach Abschluss des Startvorganges die Hilfswicklung (8) über die Kapazität (32) bestrombar ist.

18. Tauchmotor nach einem der vorangehenden Ansprüche, **dadurch gekennzeichnet, dass** die Starteinrichtung (10. 14, 16, 18, 20, 22) in einem Gehäuse des Tauchmotors an einer zum Anschluss einer Pumpe vorgesehenen Axialseite des Motors angeordnet ist.

## Claims

1. A submersible motor for a submersible pump, which is designed as a single-phase asynchronous motor and comprises a main winding (6), an auxiliary winding (8) as well as a starting device (10, 14, 16, 18, 20, 22) for the control of the starting procedure of the submersible motor, wherein the starting device (10, 14, 16, 18, 20, 22) for the control of the current feed of the auxiliary winding (8) during the starting phase comprises at least one electronic switch (20) in the circuit of the auxiliary winding (8), **characterised in that** the electronic switch (20) may be actuated in a manner such that the current feed of the auxiliary winding is matched to the angular position of the electromagnetic field of a rotor.

2. A submersible motor according to claim 1, **characterised in that** the starting device (10, 14, 16, 18, 20, 22) for the control of the current feed of the main winding (6) comprises an electronic switch (22) in the circuit of the main winding (6).

3. A submersible motor according to claim 1 or 2, **characterised in that** the electronic switch (20, 22) is a triac.

4. A submersible motor according to one of the claims 1 to 3, **characterised in that** the starting device (10, 14, 16, 18, 20, 22) is designed in a manner, such that for starting the submersible motor, it detects at least one characteristic value of the induced counter-voltage (36) in the main winding (6) and/or in the auxiliary winding (8), and controls the current feed of the main winding (6) and/or the auxiliary winding (8) in dependence of this value.

5. A submersible motor according to one of the preceding claims, **characterised in that** the starting device (10, 14, 16, 18, 20, 22) is designed in a manner, such that for starting the submersible motor, it detects at least one characteristic value of a supply voltage (34) of the submersible motor and controls the current feed of the main winding (6) and/or the auxiliary winding (8) in dependence on this value.

6. A submersible motor according to one of the preceding claims, **characterised in that** the starting device (10, 14, 16, 18, 20, 22) is designed in a manner, such that for starting the submersible motor, it switches on the current feed of the auxiliary winding or the main winding (6), preferably the main winding (6), after a detected zero-crossing of a supply voltage (34), preferably for a certain time interval.

7. A submersible motor according to claim 6, **characterised in that** the starting device (10, 14, 16, 18, 20, 22) is designed in a manner, such that for starting the submersible motor in a second half-period of the supply voltage (34), which is subsequent to the first switching-on (38) of the current feed of the auxiliary winding or the main winding (6), it switches on the current feed of the main winding or auxiliary winding (8), preferably the auxiliary winding, for a certain time interval.

8. A submersible motor according to claim 7, **characterised in that** the starting device (10, 14, 16, 18, 20, 22) is designed in a manner, such that for starting the submersible motor in a third half-period of the supply voltage (34), subsequent to the switching-on (38) of current feed of the main winding (6) and of the auxiliary winding (8), it determines an angular position of the rotor field (50) in relation to the supply voltage (34) by way of analysis of the induced countervoltage (36) in the main winding (6), and on detecting a predefined angular position (50), it switches on the current feed of the main winding (6) in a subsequent fourth half-period of the supply voltage (34), for a certain time interval.

9. A submersible motor according to claim 8, **characterised in that** the starting device (10, 14, 16, 18, 20, 22) is designed in a manner such that after switching-on the current feed of the main winding (6) in a subsequent half-period, the current feed of the auxiliary winding (8) is switched on for a certain time interval.

10. A submersible motor according to one or more of the claims 6 to 9, **characterised in that** the certain time interval is equal to or shorter than the duration of a half-period of the supply voltage (34).

11. A submersible motor according to one of the claims 8 to 10, **characterised in that** the starting device (10, 14, 16, 18, 20, 22) analyses the induced countervoltage (36) in the main winding at two points in time (46, 48), for determining the angular position.

12. A submersible motor according to one of the claims 8 to 11, **characterised in that** the starting device (10, 14, 16, 18, 20, 22) is designed in a manner, such that it switches on the current feed of the main winding (6) in the fourth half-period, when the following three conditions characterising the predefined angular position are fulfilled:
a) the gradient of the countervoltage (36) induced in the main winding (6) has a reverse polarity to the supply voltage (34),
b) after the subsequent zero-crossing of the supply voltage (34), the countervoltage (36) induced in the main winding (6) in the fourth half-period has the same polarity as the supply voltage (34),
c) in the fourth half-period, the magnitude of the countervoltage (36) induced in the main winding (6) is smaller than the magnitude of the supply voltage (34).

13. A submersible motor according to one of the claims 8 to 12, **characterised in that** the third and fourth half-period of the supply voltage (34) are two directly consecutive half-periods.

14. A submersible motor according to one of the claims 8 to 13, **characterised in that** the starting device (10, 14, 16, 18, 20, 22) is designed in a manner such that for starting the submersible motor in the case that the angular position of the rotor field (50) required for switching on the current feed of the main winding (6) is not given, it continues the analysis of the induced countervoltage (36), until the predefined angular position is given, and then switches on the current feed of the main winding (6).

15. A submersible motor according to one of the claims 8 to 14, **characterised in that** the starting device (10, 14, 16, 18, 20, 22) is designed in a manner such that the switching-on (54) of the current feed of the main winding (6) on detecting the predefined angular position and preferably the subsequent switching-on (56) of the current feed of the auxiliary winding (8) are repeated periodically, until the starting procedure of the submersible motor is completed.

16. A submersible motor according to one of the claims 2 to 15, **characterised in that** the electronic switch (22) in the circuit of the main winding (6) is additionally used for a phase-angle control for adapting the submersible motor to different supply voltages, and/or as an overvoltage protection, and/or in combination with a temperature sensor for switching off the current feed on overheating of the submersible motor.

17. A submersible motor according to one of the preceding claims, **characterised in that** a capacitance (32) with a further electronic switch (30) and which is connected in parallel to the electronic switch (20) and is preferably arranged in the motor, is provided in the circuit of the auxiliary winding (8), wherein the starting device (10, 14, 16, 18, 20, 22) or a control device is designed in a manner, such that the auxiliary winding (8) may be subjected to current via the capacitance (32) via the further electronic switch (30) after completion of the starting procedure.

18. A submersible motor according to one of the preceding claims, **characterised in that** the starting device (10, 14, 16, 18, 20, 22) is arranged in a housing of the submersible motor on an axial side of the motor provided for connection of a pump.

## Revendications

1. Moteur immergé pour pompe immergée, qui est conçu sous la forme d'un moteur asynchrone monophasé et présente un enroulement primaire (6), un enroulement auxiliaire (8), ainsi qu'un dispositif de démarrage (10, 14, 16, 18, 20, 22) permettant de commander le processus de démarrage du moteur immergé, dans lequel le dispositif de démarrage (10, 14, 16, 18, 20, 22), pour commander l'alimentation en courant de l'enroulement auxiliaire (8) pendant la phase de démarrage, présente au moins un commutateur électronique (20) dans le circuit de l'enroulement auxiliaire (8), **caractérisé en ce que** le commutateur électronique (20) peut être actionné de façon telle que l'alimentation en courant de l'enroulement auxiliaire est réglée sur la position angulaire du champ électromagnétique d'un rotor.

2. Moteur immergé selon la revendication 1, **caractérisé en ce que** le dispositif de démarrage (10, 14, 16, 18, 20, 22) présente pour commander l'alimentation en courant de l'enroulement primaire (6) un commutateur électronique (22) dans le circuit de l'enroulement primaire (6).

3. Moteur immergé selon la revendication 1 ou 2, **caractérisé en ce que** le commutateur électronique (20, 22) est un triac.

4. Moteur immergé selon l'une des revendications 1 à 3, **caractérisé en ce que** le dispositif de démarrage (10, 14, 16, 18, 20, 22) est conçu de façon telle que pour démarrer le moteur immergé, il détecte au moins une valeur caractéristique de la contre-tension induite (36) dans l'enroulement primaire (6) et/ou dans l'enroulement auxiliaire (8) et commande l'alimentation en courant de l'enroulement primaire (6) et/ou de l'enroulement auxiliaire (8) en fonction de cette valeur.

5. Moteur immergé selon l'une des revendications précédentes, **caractérisé en ce que** le dispositif de démarrage (10, 14, 16, 18, 20, 22) est conçu de façon telle que pour démarrer le moteur immergé, il détecte au moins une valeur caractéristique d'une tension d'alimentation (34) du moteur immergé et commande l'alimentation en courant de l'enroulement primaire (6) et/ou de l'enroulement auxiliaire (8) en fonction de cette valeur.

6. Moteur immergé selon l'une des revendications précédentes, **caractérisé en ce que** le dispositif de démarrage (10, 14, 16, 18, 20, 22) est conçu de façon telle que pour démarrer le moteur immergé, il commute l'alimentation en courant de l'enroulement auxiliaire ou de l'enroulement primaire (6), de préférence de l'enroulement primaire (6), après détection d'un point zéro d'une tension d'alimentation (34), de préférence pendant un intervalle de temps déterminé.

7. Moteur immergé selon la revendication 6, **caractérisé en ce que** le dispositif de démarrage (10, 14, 16, 18, 20, 22) est conçu de façon telle que pour démarrer le moteur immergé, dans une seconde demi-période de l'alimentation en tension (34) succédant à la première commutation (38) de l'alimentation en courant de l'enroulement auxiliaire ou de l'enroulement primaire (6), il commute l'alimentation en courant de l'enroulement primaire ou de l'enroulement auxiliaire (8), de préférence de l'enroulement auxiliaire, pendant un intervalle de temps déterminé.

8. Moteur immergé selon la revendication 7, **caractérisé en ce que** le dispositif de démarrage (10, 14, 16, 18, 20, 22) est conçu de façon telle que pour démarrer le moteur immergé, dans une troisième demi-période de l'alimentation en tension (34) succédant à la commutation (38) de l'alimentation en courant de l'enroulement primaire (6) et de l'enroulement auxiliaire (8), il détermine une position angulaire du champ du rotor (50) en comparaison avec la tension d'alimentation (34) par analyse de la contre-tension induite (36) dans l'enroulement primaire (6), et lorsqu'il détecte une position angulaire déterminée (50), commute l'alimentation en courant de l'enroulement primaire (6) dans une quatrième demi-période suivante de l'alimentation en tension (34) pendant un intervalle de temps déterminé.

9. Moteur immergé selon la revendication 8, **caractérisé en ce que** le dispositif de démarrage (10, 14, 16, 18, 20, 22) est conçu de façon telle qu'après la commutation de l'alimentation en courant de l'enroulement primaire (6), dans une demi-période suivante, il commute l'alimentation en courant de l'enroulement auxiliaire (8) pendant un intervalle de temps déterminé.

10. Moteur immergé selon une ou plusieurs des revendications 6 à 9, **caractérisé en ce que** l'intervalle de temps déterminé est inférieur ou égal à la durée d'une demi-période de l'alimentation en tension (34).

11. Moteur immergé selon l'une des revendications 8 à 10, **caractérisé en ce que** le dispositif de démarrage (10, 14, 16, 18, 20, 22), pour déterminer la position angulaire, analyse la contre-tension induite (36) dans l'enroulement primaire à deux moments (46, 48).

12. Moteur immergé selon l'une des revendications 8 à 11, **caractérisé en ce que** le dispositif de démarrage (10, 14, 16, 18, 20, 22) est conçu de façon telle qu'il commute l'alimentation en courant de l'enroulement primaire (6) dans la quatrième demi-période lorsque les trois conditions suivantes caractérisant la position angulaire prédéterminée sont réunies :
a) la pente de la contre-tension induite (36) dans l'enroulement primaire (6) a un signe inverse de la tension d'alimentation (34),
(b) après le point zéro suivant de la tension d'alimentation (34), dans la quatrième demi-période, la contre-tension induite (36) dans l'enroulement primaire (6) a le même signe que la tension d'alimentation (34),
(c) dans la quatrième demi-période, la valeur de la contre-tension induite (36) dans l'enroulement primaire (6) est inférieure à la valeur de la tension d'alimentation (34).

13. Moteur immergé selon l'une des revendications 8 à 12, **caractérisé en ce que** les troisième et quatrième demi-périodes de la tension d'alimentation (34) sont deux demi-périodes qui se succèdent directement.

14. Moteur immergé selon l'une des revendications 8 à 13, **caractérisé en ce que** le dispositif de démarrage (10, 14, 16, 18, 20, 22) est conçu de façon telle que pour démarrer le moteur immergé dans le cas où la position angulaire du champ de rotor (50) nécessaire à la commutation de l'alimentation en courant de l'enroulement primaire (6) n'est pas donnée, il poursuit l'analyse de la contre-tension induite (36) jusqu'à ce que la position angulaire prédéterminée soit donnée, puis il commute l'alimentation en courant de l'enroulement primaire (6).

15. Moteur immergé selon l'une des revendications 8 à 14, **caractérisé en ce que** le dispositif de démarrage (10, 14, 16, 18, 20, 22) est conçu de façon telle que la commutation (54) de l'alimentation en courant de l'enroulement primaire (6), lors de la détection de la position angulaire prédéterminée, et de préférence la commutation (56) suivante de l'alimentation en courant de l'enroulement auxiliaire (8), est répétée périodiquement jusqu'à ce que le processus de démarrage du moteur immergé soit terminé.

16. Moteur immergé selon l'une des revendications 2 à 15, **caractérisé en ce que** le commutateur électronique (22) dans le circuit de l'enroulement primaire (6) est en outre utilisé pour une commande à phase permettant d'adapter le moteur immergé à différentes tensions d'alimentation et/ou en tant que protection contre les surtensions et/ou en combinaison avec un capteur de température pour déconnecter l'alimentation en courant en cas de surchauffe du moteur immergé.

17. Moteur immergé selon l'une des revendications précédentes, **caractérisé en ce qu'**est prévu dans le circuit de l'enroulement auxiliaire (8) un condensateur (32), connecté en parallèle avec le commutateur électronique (20), disposé de préférence dans le moteur, avec un autre commutateur électronique (30), le dispositif de démarrage (10, 14, 16, 18, 20, 22) ou un dispositif de commande étant conçu de façon telle que par l'autre commutateur électronique (30), il est possible après la fin du processus de démarrage d'alimenter en courant l'enroulement auxiliaire (8) via le condensateur (32).

18. Moteur immergé selon l'une des revendications précédentes, **caractérisé en ce que** le dispositif de démarrage (10, 14, 16, 18, 20, 22) est disposé dans un carter du moteur immergé au niveau d'un côté axial du moteur prévu pour le raccordement d'une pompe.
